# EUROPEAN PATENT APPLICATION

(11) **EP 4 155 331 A1**
(43) Date of publication of application: **29.03.2023**
(21) Application number: 21808819.3
(22) Date of filing: 11.05.2021
(51) Int. Cl.: C08F 290/06, C09C 3/10, C09C 3/12, C08F 293/00, C09D 201/00, C09D 11/00, C09D 7/62

(54) **DIBLOCK COPOLYMER, METHOD FOR PRODUCING DIBLOCK COPOLYMER, AND USE OF DIBLOCK COPOLYMER**

(30) Priority: 22.05.2020 JP 2020089641
(71) Applicant: SHIN-ETSU CHEMICAL CO., LTD., Tokyo 1000005 (JP)
(72) Inventor: IMAI, Taro, Annaka-shi, Gunma 379-0224 (JP); HATA, Ryunosuke, Annaka-shi, Gunma 379-0224 (JP)
(74) Representative: Angerhausen, Christoph
(86) International application number: PCT/JP2021/017827
(87) International publication number: WO 2021/235266

(57) **Abstract**

Provided are a surface treatment agent for powder capable of being used to produce a dispersion superior in dispersibility, fluidity and temporal stability; and a dispersion containing a powder treated with such surface treatment agent for powder. The agent is a diblock copolymer whose main chain is comprised of a silicone graft copolymer block represented by a formula [I] and a polar copolymer block represented by a formula [II], wherein one end structure of the main chain is represented by a formula [III], and the other end structure of the main chain is represented by a formula [IV], the formulae [I] to [IV] being expressed as 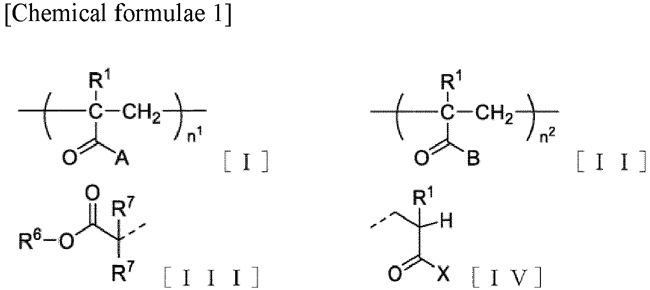 wherein R¹ represents a hydrogen atom or a methyl group; A represents an organopolysiloxane-containing group; n¹ satisfies 1≤ n¹ ≤50; B represents a polar group-containing monovalent hydrocarbon group having 1 to 20 carbon atoms, an amino group or a hydroxyl group; n² satisfies 1≤ n²≤50; R⁶ represents an alkyl group having 1 to 4 carbon atoms; each R⁷ independently represents a hydrogen atom or an alkyl group having 1 to 4 carbon atoms; X represents the group represented by A in the formula [I] or the group represented by B in the formula [II].

## Description

### TECHNICAL FIELD

The present invention relates to a surface treatment agent for powder that is superior in dispersibility, fluidity and preservation stability, particularly to a surface treatment agent for powder that is a (meth)acryl silicone-based diblock copolymer.

### BACKGROUND ART

In general, it is difficult to disperse a fine-particle powder into a liquid in a stable and highly concentrated manner; agglomeration occurs due to the charge and polarity of the powder as well as a small amount of impurities, whereby dispersibility and stability are impaired. For example, in the case of a dispersion containing a pigment comprised of fine particles, a significant increase in viscosity thereof is observed with time, which not only makes it difficult to for example transport the product, but may also make it difficult to use the same as gelation takes place.

As a method for improving the dispersion stability of a fine-particle powder, there may be employed, for example, mixing with the aid of a mechanical force such as that brought by a homomixer, a mill, a kneader or a roller. However, there are limitations to a dispersion that is triggered only by a mechanical force(s); there are many cases where agglomeration occurs with time even though the powder has once uniformly dispersed. In this regard, in order to improve the dispersibility and stability of a powder, proposals have been made on treating the surface of a powder with various polymer materials. Such polymer material is structured in such a manner that it has both a moiety adsorbable to a powder, and a moiety having a high affinity for a solvent as a dispersion medium; the performance of a polymer material is determined by a balance between these two functional moieties.

A polymer material effective in dispersing a powder in a solvent can be typically categorized as an AB-type copolymer or a BAB-type copolymer; using these copolymers, there can be prepared dispersion liquids of powders used in various compositions. As a polymer material, there is often used an AB block copolymer having a polar group(s) such as an acid or amine bondable to the surface of a powder pigment; Patent document 1 shows an example where a carboxyl group-containing acrylic resin is block-copolymerized.

Further, there are also known, for example, an AB, BAB or ABC block copolymers for dispersing a powder pigment into an ink.

However, while these block copolymers are each effective in easing the precipitation and agglomeration of a powder, the effects thereof have never been satisfactory. Further, there has been a flaw that the quality of a product will be impaired as the viscosity of a dispersion increases with time and/or as the powder agglomerates or precipitates, depending on a treatment method and a treatment agent.

### PRIOR ART DOCUMENTS

### Patent documents

Patent document 1: JP-A-2005-194487

### SUMMARY OF THE INVENTION

### Problems to be solved by the invention

Thus, it is an object of the present invention to provide a copolymer useful as a surface treatment agent for powder capable of being used to produce a dispersion superior in dispersibility, fluidity and temporal stability. It is also an object of the present invention to provide a dispersion that is highly dispersed as a result of using such surface treatment agent for powder.

### Means to solve the problems

The inventors of the present invention diligently conducted a series of studies to achieve the above object, and completed the invention as follows. That is, the inventors found that the aforementioned problems can be solved by a diblock copolymer having, as its structural components, a hydrophobic silicone graft copolymer block, and a polar copolymer block having a particular polar group(s) serving as a functional group.

Thus, the present invention is to provide a diblock copolymer comprised of a silicone graft copolymer block represented by the following formula [I] (segment [I]) and a (meth)acryl copolymer block represented by the following formula [II] (segment [II]), where one end structure of the main chain is represented by the following formula [III], and the other end structure of the main chain is represented by the following formula [IV].
[1] A diblock copolymer whose main chain is comprised of a silicone graft copolymer block represented by a formula [I] and a polar copolymer block represented by a formula [II], wherein one end structure of the main chain is represented by a formula [III], and the other end structure of the main chain is represented by a formula [IV], the formula [I] being expressed as 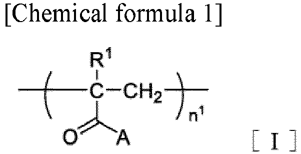
   wherein R¹ represents a hydrogen atom or a methyl group,
      A represents an organopolysiloxane-containing group represented by a general formula (1) or an organopolysiloxane-containing group represented by a general formula (2),
      n¹ represents a number of repeating units and satisfies 1≤ n¹ ≤50,
   wherein the general formula (1) is expressed as 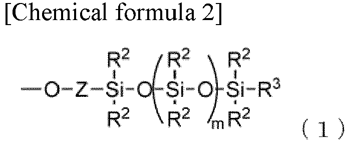
   wherein the organopolysiloxane-containing group represented by the general formula (1) has a linear organopolysiloxane structure where a repeating unit number m is 0 to 100,
      Z represents a divalent organic group,
      each R² independently represents a saturated hydrocarbon group having 1 to 10 carbon atoms or a phenyl group,
      R³ represents a saturated hydrocarbon group having 1 to 10 carbon atoms,
      m is a number of 0 to 100, and
   wherein the general formula (2) is expressed as
      [Chemical formula 3]

      -O-Lⁱ (2)
   wherein the organopolysiloxane-containing group represented by the general formula (2) has a dendritic organopolysiloxane structure whose hierarchical number c is 1 to 10,
      Lⁱ is a silylorgano group represented by a general formula (3),
      i represents a number of each hierarchy of the dendritic structure and is each integer from 1 to c in both the general formulae (2) and (3), and is 1 in the general formula (2),
   wherein the general formula (3) is expressed as 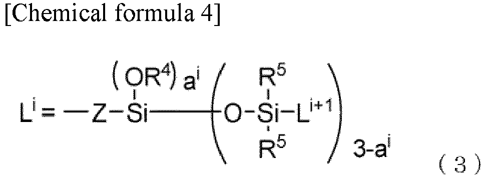
   wherein Z represents a divalent organic group,
      R⁴ represents a saturated hydrocarbon group having 1 to 10 carbon atoms or a phenyl group,
      each R⁵ independently represents an alkyl group having 1 to 8 carbon atoms or a phenyl group,
      Lⁱ⁺¹ is the silylorgano group L' represented by the general formula (3) when the hierarchy i is lower than c (lower than the uppermost hierarchy); and is a hydrogen atom, a saturated hydrocarbon group having 1 to 10 carbon atoms or a phenyl group, when the hierarchy i is i=c (the uppermost hierarchy),
      a' represents the number of OR⁴ groups in the hierarchy i and is a number of 0 to 3; the formula [II] being expressed as 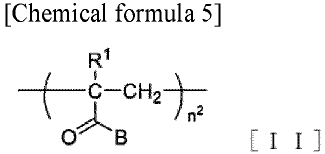
   wherein R¹ represents a hydrogen atom or a methyl group,
      B is any group selected from -OB', -NH₂ and -OH (B' represents a monovalent hydrocarbon group that has 1 to 20 carbon atoms, and has at least one kind of divalent group selected from a polyoxyalkylene group having 1 to 20 carbon atoms, -C(O)-, -O-, -S- and -NR-(R represents a hydrogen atom or a monovalent hydrocarbon group having 1 to 20 carbon atoms)),
      n² represents a number of repeating units and satisfies 1≤ n²≤50; the formula [III] being expressed as 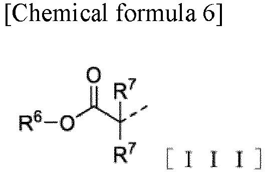
   wherein R⁶ represents an alkyl group having 1 to 4 carbon atoms,
      each R⁷ independently represents a hydrogen atom or an alkyl group having 1 to 4 carbon atoms; the formula [IV] being expressed as 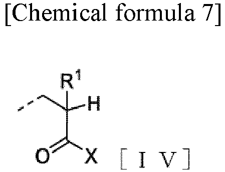
   wherein R¹ represents a hydrogen atom or a methyl group,
      X represents the group represented by A in the formula [I] or the group represented by B in the formula [II].
[2] The diblock copolymer according to [1], wherein B in the formula [II] is a group represented by the following formula (8') or (9')
   [Chemical formulae 8]

   -O-CH₂-CH₂-N(R⁷)₂ (8')

   -O-(C₂H₄O)_{n³}-R³ (9')

   wherein in the formula (8'), each R⁷ independently represents a hydrogen atom or an alkyl group having 1 to 4 carbon atoms; in the formula (9'), R³ represents a saturated hydrocarbon group having 1 to 10 carbon atoms, and n³ represents a number of repeating units and satisfies 1≤n³≤10.
[3] The diblock copolymer according to [1] or [2], wherein the divalent organic group represented by Z in the general formulae (2) and (3) is a saturated hydrocarbon group having 2 to 12 carbon atoms.
[4] The diblock copolymer according to any one of [1] to [3], wherein n²/n¹ is 0.02 to 10.
[5] A diblock copolymer production method for producing the diblock copolymer according to any one of [1] to [4], wherein the method uses a compound represented by a general formula (4) as an initiator, and comprises:
   a step of performing group transfer polymerization on a monomer represented by a general formula (5); and
   a step of performing group transfer polymerization on a polar monomer represented by a general formula (6), the general formula (4) being expressed as

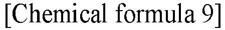

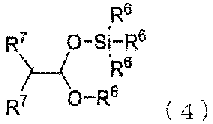

   wherein each R⁶ independently represents an alkyl group having 1 to 4 carbon atoms,
      each R⁷ independently represents a hydrogen atom or an alkyl group having 1 to 4 carbon atoms; the general formula (5) being expressed as 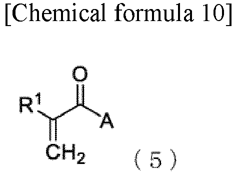
   wherein R¹ represents a hydrogen atom or a methyl group,
      A represents an organopolysiloxane-containing group represented by a general formula (1) or an organopolysiloxane-containing group represented by a general formula (2),
   wherein the general formula (1) is expressed as 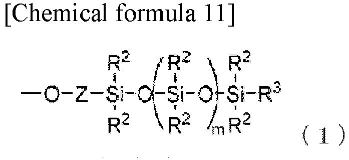
   wherein the organopolysiloxane-containing group represented by the general formula (1) has a linear organopolysiloxane structure where a repeating unit number m is 0 to 100,
      Z represents a divalent organic group,
      each R² independently represents a saturated hydrocarbon group having 1 to 10 carbon atoms or a phenyl group,
      R³ represents a saturated hydrocarbon group having 1 to 10 carbon atoms,
      m is a number of 0 to 100, and
   wherein the general formula (2) is expressed as
      [Chemical formula 12]

      -O-Lⁱ (2)
   wherein the organopolysiloxane-containing group represented by the general formula (2) has a dendritic organopolysiloxane structure whose hierarchical number c is 1 to 10,
      Lⁱ is a silylorgano group represented by a general formula (3),
      i represents a number of each hierarchy of the dendritic structure and is each integer from 1 to c in both the general formulae (2) and (3), and is 1 in the general formula (2), wherein the general formula (3) is expressed as 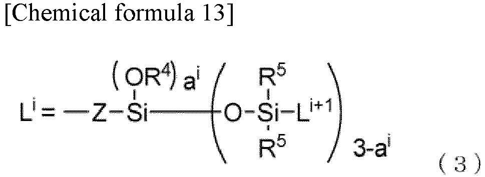
   wherein Z represents a divalent organic group,
      R⁴ represents a saturated hydrocarbon group having 1 to 10 carbon atoms or a phenyl group,
      each R⁵ independently represents an alkyl group having 1 to 8 carbon atoms or a phenyl group,
      Lⁱ⁺¹ is the silylorgano group L' represented by the general formula (3) when the hierarchy i is lower than c (lower than the uppermost hierarchy); and is a hydrogen atom, a saturated hydrocarbon group having 1 to 10 carbon atoms or a phenyl group, when the hierarchy i is i=c (the uppermost hierarchy),
      a' represents the number of OR⁴ groups in the hierarchy i and is a number of 0 to 3; the general formula (6) being expressed as 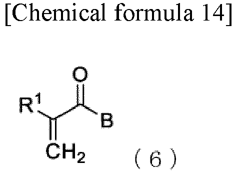
   wherein R¹ represents a hydrogen atom or a methyl group,
      B is any group selected from -OB', -NH₂ and -OH (B' represents a monovalent hydrocarbon group that has 1 to 20 carbon atoms, and has at least one kind of divalent group selected from a polyoxyalkylene group having 1 to 20 carbon atoms, -C(O)-, -O-, -S- and -NR-(R represents a hydrogen atom or a monovalent hydrocarbon group having 1 to 20 carbon atoms)).
[6] The diblock copolymer production method according to [5], wherein the polar monomer represented by the general formula (6) is a polar monomer represented by the following general formula (8) or (9), the formula (8) being expressed as 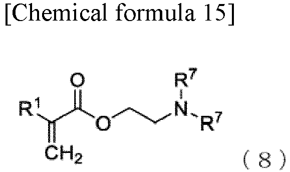
   wherein R¹ represents a hydrogen atom or a methyl group,
      each R⁷ independently represents a hydrogen atom or an alkyl group having 1 to 4 carbon atoms; the formula (9) being expressed as 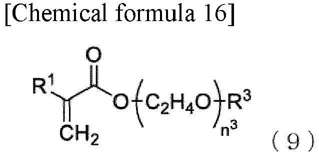
   wherein R¹ represents a hydrogen atom or a methyl group,
      R³ represents a saturated hydrocarbon group having 1 to 10 carbon atoms,
      n³ represents a number of repeating units and satisfies 1≤n³≤10.
[7] The diblock copolymer production method according to [6], wherein the polar monomer represented by the general formula (8) is a polar monomer represented by the following formula (8-1) 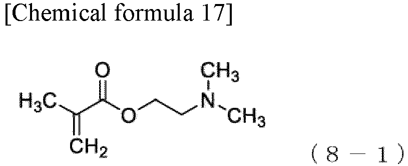
[8] A surface treatment agent for powder, comprising the diblock copolymer according to any one of [1] to [4].
[9] A dispersion comprising:
   a powder treated with the surface treatment agent for powder according to [8]; and
   an oil agent.
[10] A cosmetic material composition, coating material composition or ink composition comprising the dispersion according to [9].

### Effects of the invention

The diblock copolymer of the present invention has, as its structural components, a hydrophobic silicone graft copolymer block (segment [I]), and a polar copolymer block having a particular polar group(s) serving as a functional group (segment [II]). The diblock copolymer of the present invention can be used as a surface treatment agent for powder that is used at the time of dispersing a powder into an oil agent, and is capable of effectively dispersing the powder into the oil agent in a uniform manner. That is, if using this diblock copolymer as a surface treatment agent for powder, the polar group(s) will interact with the surface of a powder so that the silicone moiety will improve a compatibility to the oil agent and prevent the powder from being agglomerated, thereby making it possible to obtain a dispersion superior in dispersibility, fluidity and temporal stability.

### MODE FOR CARRYING OUT THE INVENTION

The present invention is described in detail hereunder. Further, the term "(meth)acryl " used in this specification refers to methacryl and acryl. Similarly, the term "(meth)acrylate" used in this specification refers to methacrylic acid ester and acrylic acid ester.

### [Diblock copolymer]

A diblock copolymer of the present invention has, in its main chain, a silicone graft copolymer block unit represented by the following formula [I] (segment [I]) and a polar copolymer block unit represented by the following formula [II] (segment [II]), where one end structure of the main chain is a structure represented by the following formula [III], and the other end structure of the main chain is a structure represented by the following formula [IV].

### Segment [I]

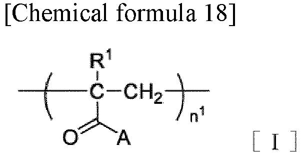

In the formula [I], R¹ represents a hydrogen atom or a methyl group. A represents an organopolysiloxane-containing group represented by the following general formula (1), or an organopolysiloxane-containing group represented by the following general formula (2). n¹ represents a number of the repeating units; n¹ is 1 to 50, preferably 1 to 20, more preferably 3 to 10.

The organopolysiloxane-containing group represented by the general formula (1) is a group having a linear organopolysiloxane structure where a repeating unit number m of a diorganosiloxy group is 0 to 100.

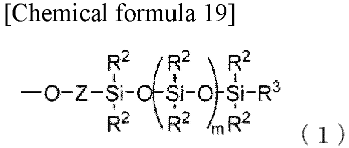

In the general formula (1), Z represents a divalent organic group, preferably a saturated hydrocarbon group having 2 to 12 carbon atoms, more preferably a propylene group. Each R² independently represents a saturated hydrocarbon group having 1 to 10 carbon atoms or a phenyl group, preferably a saturated hydrocarbon group having 1 to 5 carbon atoms, more preferably a methyl group. R³ represents a saturated hydrocarbon group having 1 to 10 carbon atoms, preferably a saturated hydrocarbon group having 1 to 5 carbon atoms, more preferably a methyl group. m is a number of 0 to 100, preferably a number of 1 to 60, more preferably a number of 5 to 30.

The organopolysiloxane-containing group represented by the general formula (2) is a group having a dendritically branched structure(s), where the number of such branched structures (hierarchical number c) is an integer of 1 to 10, preferably an integer of 1 to 6, more preferably an integer of 1 to 4. [Chemical formula 20]

-O-Lⁱ (2)

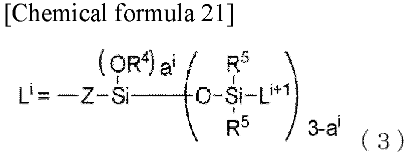

In the general formulae (2) and (3), i represents a number of each hierarchy of the dendritic structure, and is each integer from 1 to c.

In the general formula (2), L' is a silylorgano group represented by the general formula (3), and a hierarchy i in the general formula (2) is 1.

In the general formula (3), Z represents a divalent organic group, preferably a saturated hydrocarbon group having 2 to 12 carbon atoms, more preferably a propylene group. R⁴ represents a saturated hydrocarbon group having 1 to 10 carbon atoms or a phenyl group, preferably a saturated hydrocarbon group having 1 to 5 carbon atoms, more preferably a methyl group. R⁵ represents an alkyl group having 1 to 8 carbon atoms or a phenyl group, preferably an alkyl group having 1 to 3 carbon atoms, more preferably a methyl group. Lⁱ⁺¹ is the silylorgano group L' represented by the general formula (3) when the hierarchy i is lower than c (lower than the uppermost hierarchy); and is a hydrogen atom, a saturated hydrocarbon group having 1 to 10 carbon atoms or a phenyl group, when the hierarchy i is i=c (the uppermost hierarchy). As L' when i=c (the uppermost hierarchy), preferred is a saturated hydrocarbon group having 1 to 8 carbon atoms, more preferred is a saturated hydrocarbon group having 1 to 4 carbon atoms, a' represents the number of the OR⁴ groups in the hierarchy i, and is a number of 0 to 3.

A dendritic organopolysiloxane of a hierarchical number 1 (c=1) is expressed by the following general formula (3-1) wherein L² represents a hydrogen atom, a saturated hydrocarbon group having 1 to 10 carbon atoms or a phenyl group.

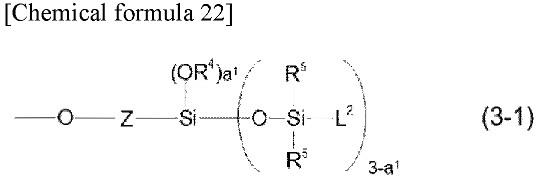

A dendritic organopolysiloxane of a hierarchical number 2 (c=2) is expressed by the following general formula (3-2) wherein L³ represents a hydrogen atom, a saturated hydrocarbon group having 1 to 10 carbon atoms or a phenyl group.

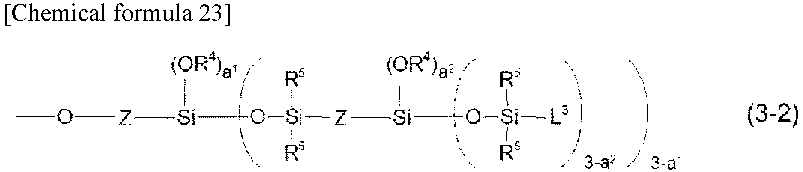

A dendritic organopolysiloxane of a hierarchical number 3 (c=3) is expressed by the following general formula (3-3) wherein L³ represents a hydrogen atom, a saturated hydrocarbon group having 1 to 10 carbon atoms or a phenyl group.

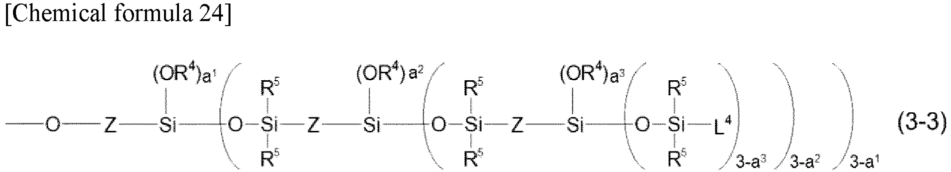

In the general formulae (3-1) to (3-3), Z, R⁴ and R⁵ are each identical to those described above, and each of a¹, a² and a³ is a number of 0 to 3.

### Segment [II]

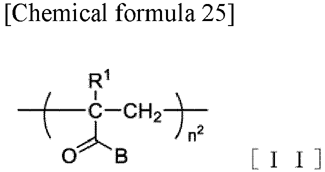

In the formula [II], R¹ represents a hydrogen atom or a methyl group. B is any group selected from -OB', -NH₂ and -OH (B' represents a monovalent hydrocarbon group that has 1 to 20 carbon atoms, and has at least one kind of divalent group selected from a polyoxyalkylene group having 1 to 20 carbon atoms, -C(O)-, -O-, -S- and -NR- (R represents a hydrogen atom or a monovalent hydrocarbon group having 1 to 20 carbon atoms)), and is preferably a group represented by a general formula (8') or (9'). Further, n² represents a number of the repeating units; n² is 1 to 50, preferably 1 to 20, more preferably 3 to 10.
[Chemical formulae 26]

-O-CH₂-CH₂-N(R⁷)₂ (8' )

-O-(C₂H₄O)_{n³}-R³ (9' )

(In the formula (8'), each R⁷ independently represents a hydrogen atom or an alkyl group having 1 to 4 carbon atoms. In the formula (9'), R³ represents a saturated hydrocarbon group having 1 to 10 carbon atoms, n³ represents a number of the repeating units, provided that 1≤n³≤10.)

### End structure [III]

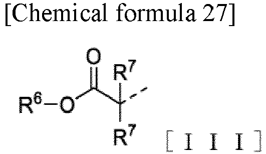

In the formula [III], R⁶ represents an alkyl group having 1 to 4 carbon atoms, preferably a methyl group. Each R⁷ independently represents a hydrogen atom or an alkyl group having 1 to 4 carbon atoms, preferably a methyl group.

### End structure [IV]

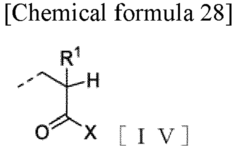

In the formula [IV], R¹ represents a hydrogen atom or a methyl group. X represents the group represented by A in the formula [I] or the group represented by B in the formula [II].

Each of the segments [I] and [II] may be composed of at least one kind of unit expressed by the formula [I] or at least one kind of unit expressed by the formula [II], or be composed of multiple kinds of units expressed by the formula [1] or multiple kinds of units expressed by the formula [II]. Further, the segments [I] and [II] that are sandwiched between the end structures [III] and [IV] are in a random order.

In the present invention, a diblock copolymer refers to a copolymer linking the segment [I] and the segment [II] as two segments having different physical properties such as polarity, water solubility, and presence or absence of affinity for powder. That is, the diblock copolymer of the present invention is a copolymer linking together the segments [I] and [II] of which the segment [I] is composed of consecutive units expressed by the formula [I], and the segment [II] is composed of consecutive units expressed by the formula [II]. If the segment [I] is composed of multiple kinds of units expressed by the formula [I], the segment [I] may have a block structure in which units expressed by an identical formula [I] are present in a consecutive manner, or a random structure in which units expressed by different formulae [I] are arranged randomly. Similarly, if the segment [II] is composed of multiple kinds of units expressed by the formula [II], the segment [II] may have a block structure in which units expressed by an identical formula [II] are present in a consecutive manner, or a random structure in which units expressed by different formulae [II] are arranged randomly.

The molecular weight of the diblock copolymer of the present invention is preferably 1,000 to 100,000, more preferably 2,000 to 10,000. Further, the polydispersity of the diblock copolymer of the present invention is preferably 1.00 to 3.00, more preferably 1.00 to 2.00, even more preferably 1.05 to 1.60. It is preferable when the molecular weight and polydispersity are within these ranges, because if using the diblock copolymer of the present invention as a dispersant, the hydrophilic segment [II] shall have a high adsorption capability to the surface of a powder, and the hydrophobic segment [I] shall become favorably compatible with an oil agent at the same time, thereby allowing the powder to be efficiently dispersed.

Further, the repeating unit number of each of the segments [I] and [II] is 1 to 50, preferably 1 to 20, more preferably 3 to 10.

A ratio between the repeating unit number of the segment [I] and the repeating unit number of the segment [II] i.e. a ratio of n²/n¹ which is a ratio between a polymerization degree n¹ of the segment [I] and a polymerization degree n² of the segment [II] is preferably 0.02 to 10, more preferably 0.05 to 5.

In the present invention, the molecular weight is a number average molecular weight measured by gel permeation chromatography (GPC) under the following conditions, using polystyrene as a reference substance.

### [Measurement conditions]

Measuring instrument: HLC-8320GPC (by Tosoh Corporation)
Developing solvent: Tetrahydrofuran (THF)
Flow rate: 0.600 mL/min
Detector: Refractive index detector (RI)
Column: TSK Guardcolumn Super H-H
   (4.6 mm I.D. × 35 mm)
   TSK gel Super H2500
   (Filler particle size: 3.0 µm, 6 mm I.D. × 150 mm)
   TSK gel Super HM-N
   (Filler particle size: 3.0 µm, 6 mm I.D. × 150 mm)
   (All manufactured by Tosoh Corporation)
Column temperature: 40°C
Sample injection volume: 50 µL (THF solution with a concentration of 0.3% by mass)

### [Production method of diblock copolymer]

The diblock copolymer of the present invention can be produced by a method having a step of performing group transfer polymerization on a monomer represented by a general formula (5), and a step of performing group transfer polymerization on a polar monomer represented by a general formula (6), using a compound represented by the following general formula (4) as an initiator. That is, the diblock copolymer of the present invention can be synthesized by sequentially performing group transfer polymerization on the monomer represented by the general formula (5) and on the polar monomer represented by the general formula (6), using the compound represented by the general formula (4) as an initiator; the monomer represented by the general formula (5) and the polar monomer represented by the general formula (6) can be subjected to group transfer polymerization in any order.

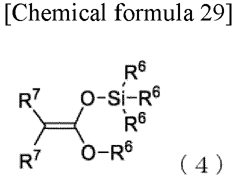

In the general formula (4), each R⁶ independently represents an alkyl group having 1 to 4 carbon atoms; each R⁷ independently represents a hydrogen atom or an alkyl group having 1 to 4 carbon atoms.

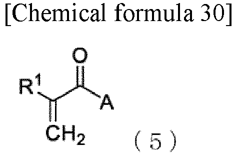

In the general formula (5), R¹ and A are defined as above in the formula [I].

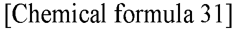

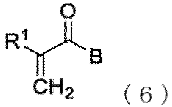

In the general formula (6), R¹ and B are defined as above in the formula [II].

As the initiator represented by the general formula (4), the following compounds may for example be used. The initiator usable in the production method of the diblock copolymer of the present invention shall not be limited to the initiators exemplified below. 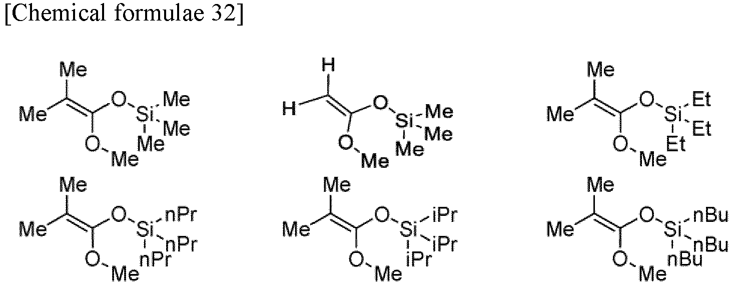 In these formulae, Me represents a methyl group, Et represents an ethyl group, nPr represents a n-propyl group, iPr represents an isopropyl group, and nBu represents a n-butyl group.

As the monomer represented by the general formula (5), there may be used for example the following monomers. The monomer usable in the production method of the diblock copolymer of the present invention shall not be limited to the monomers exemplified below.

When A in the general formula (5) is the organopolysiloxane-containing group represented by the general formula (1)

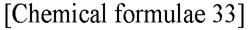

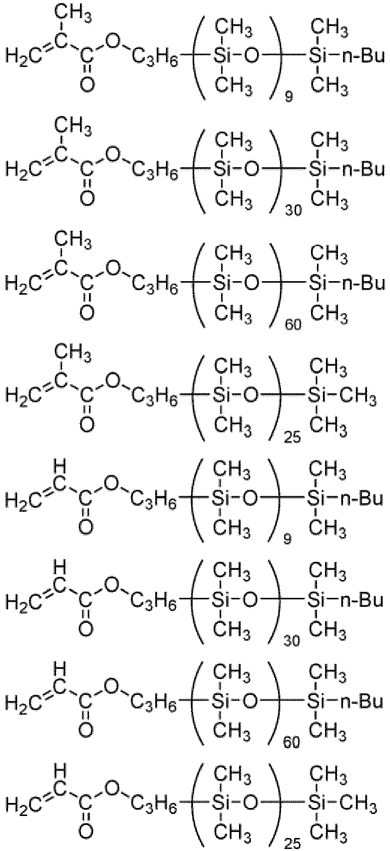

When A in the general formula (5) is the organopolysiloxane-containing group represented by the general formula (2)

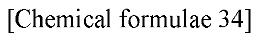

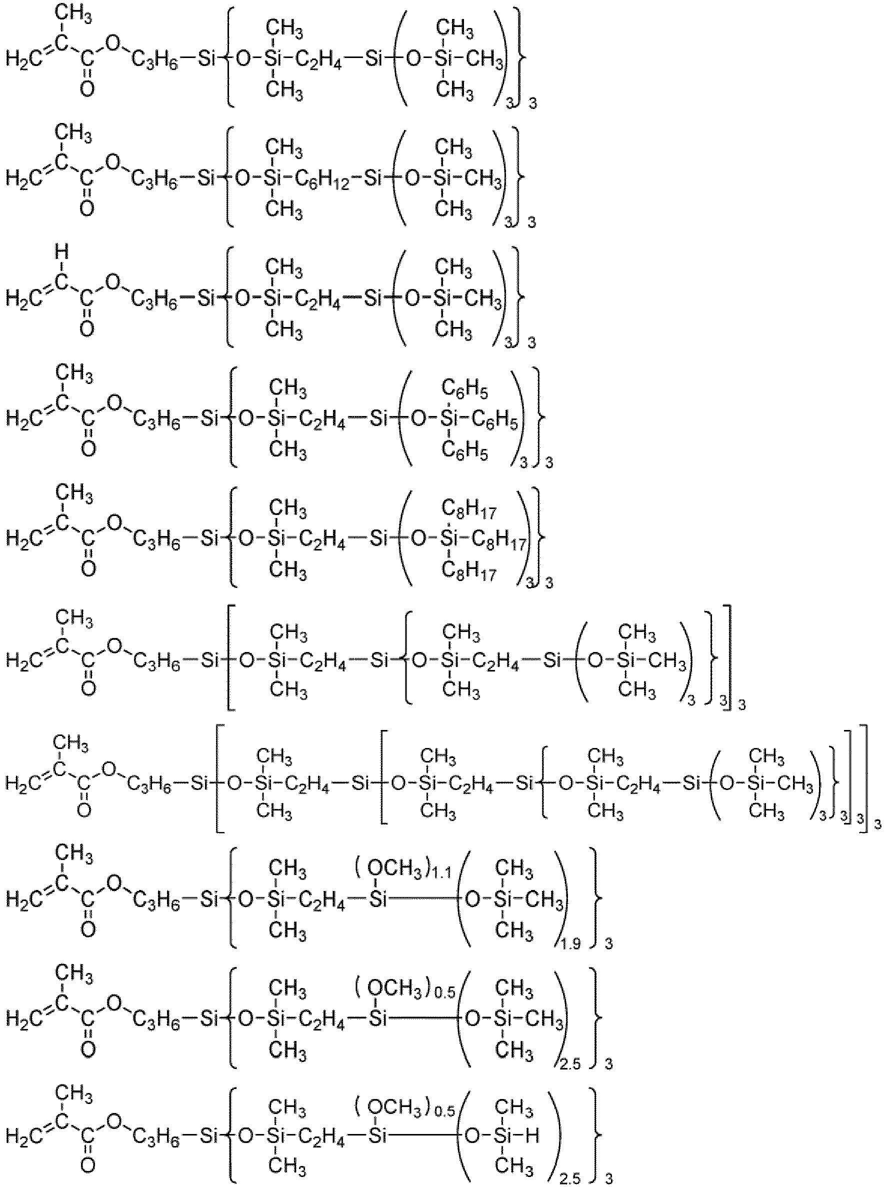

As the polar monomer (monomer) represented by the general formula (6), there may be used for example the following polar monomers. The polar monomer usable in the production method of the diblock copolymer of the present invention shall not be limited to the polar monomers exemplified below.

Specifically, there may be listed, for example, an oxyalkylene-substituted (meth)acrylate such as tetrahydrofurfuryl (meth)acrylate, di(ethyleneglycol)monomethylether (meth)acrylate, furfuryl (meth)acrylate, 2-methoxyethyl (meth)acrylate, 2-butoxyethyl (meth)acrylate, 2-ethoxyethyl (meth)acrylate, 2-(methoxyethoxy)ethyl (meth)acrylate, allyloxyethyl (meth)acrylate, 1-ethoxybutyl (meth)acrylate, tetrahydro-4H-pyranyl-2 (meth)acrylate, ethyltriglycol (meth)acrylate, butyldiglycol (meth)acrylate, poly(propyleneglycol)dimethylether (meth)acrylate and poly(ethyleneglycol)alkylether (meth)acrylate; an aminoalkyl (meth)acrylate such as dimethylaminoethyl methacrylate and diethylaminoethyl methacrylate; and a (meth)acrylamide such as (meth)acrylamide, 4-(meth)acryloylmorpholine, N-tert-butyl (meth)acrylamide, N,N-dimethyl (meth)acrylamide, N,N-diethyl (meth)acrylamide, N-(butoxymethyl) (meth)acrylamide, N-[3-(dimethylamino)propyl] (meth)acrylamide, N-dodecyl (meth)acrylamide and N-isopropyl (meth)acrylamide.

As the polar monomer represented by the general formula (6), preferred is a polar monomer represented by the following general formula (8) or (9). 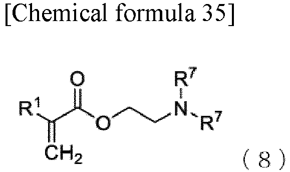 In the general formula (8), R¹ represents a hydrogen atom or a methyl group, preferably a methyl group. Each R⁷ independently represents a hydrogen atom or an alkyl group having 1 to 4 carbon atoms, preferably a methyl group and an ethyl group. 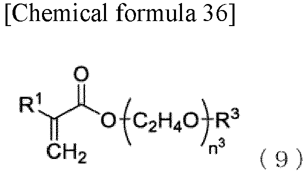 In the general formula (9), R¹ represents a hydrogen atom or a methyl group, preferably a methyl group. R³ represents a saturated hydrocarbon group having 1 to 10 carbon atoms, preferably a saturated hydrocarbon group having 1 to 5 carbon atoms, more preferably a methyl group. n³ represents a number of the repeating units, provided that 1≤n³≤10, preferably 2≤n³≤8.

As the polar monomer represented by the general formula (6), particularly preferred is a 2-(dimethylamino)ethyl methacrylate represented by a formula (8-1).

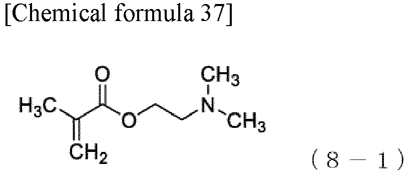

In the production method of the diblock copolymer of the present invention, group transfer polymerization is performed via the following two stages. In a first stage, any one of the monomer represented by the general formula (5) and the polar monomer represented by the general formula (6) is to be polymerized (the monomer to be polymerized in the first stage is referred to as a first monomer hereunder); subsequently, in a second stage, any one of the monomer represented by the general formula (5) and the polar monomer represented by the general formula (6), that was not polymerized in the first stage, is to be polymerized (the monomer to be polymerized in the second stage is referred to as a second monomer hereunder).

In the first stage, of the three components which are the compound represented by the general formula (4) and serving as an initiator, a catalyst, and the first monomer, two components are to be mixed together in advance, followed by adding and mixing the remaining one component thereinto so as to allow the polymerization of the first monomer to start taking place at first.

Next, after confirming that the polymerization reaction of the first monomer has stopped, the second monomer will be added to the reaction system so as to allow the polymerization of the second monomer to start taking place.

After confirming that the polymerization reaction of the second monomer has stopped, a reaction terminator will be added so as to end the reaction.

After the reaction was over, the diblock copolymer as the target product can be obtained by performing purification in a conventional manner where, for example, a solvent and the unreacted monomer are to be distilled away under a reduced pressure.

In the group transfer polymerization reactions of the first and second stages, it is preferred that a solvent be used.

As an example of a more specific production method, there may be employed the following method.

A catalyst is put into a thoroughly dried triple-necked flask, followed by adding a solvent thereto. Moreover, after adding and mixing the initiator represented by the general formula (4) thereinto, a dropping funnel is then used to deliver the first monomer by drops while performing stirring. The reaction solution is cooled according to the extent of heat generation so that the reaction solution will be maintained at an appropriate temperature. After the first monomer was delivered by drops, stirring will be performed continuously until the first monomer has been consumed, where the termination of the polymerization reaction of the first monomer will then be confirmed by confirming, via gel permeation chromatography (GPC) analysis or the like, an increase in molecular weight according to a preparation ratio between the initiator and the first monomer. Next, the second monomer will be delivered into this reaction system by drops while performing stirring. The reaction solution is cooled according to the extent of heat generation so that the reaction solution will be maintained at an appropriate temperature. After the second monomer was delivered by drops, stirring will be performed continuously until the second monomer dropped has been consumed, where a reaction terminator will be added in the end so as to end the reaction. After the reaction was over, the diblock copolymer as the target product can be obtained by performing purification in a conventional manner where, for example, the solvent and the unreacted monomer are to be distilled away under a reduced pressure.

As the reaction solvent, there may be used an aprotic organic solvent. For example, there may be listed ethyl acetate, propionitrile, toluene, xylene, bromobenzene, dimethoxyethane, diethoxyethane, diethyl ether, tetramethylene sulfone, N,N-dimethylformamide, N,N-dimethylacetamide, N-methylpyrrolidone, anisole, 2-butoxyethoxytrimethylsilane, cellosolve acetate, crown ether, acetonitrile and tetrahydrofuran (THF). In terms of reaction efficiency, preferred are dichloromethane, toluene, acetonitrile and tetrahydrofuran, of which tetrahydrofuran is more preferred.

A reaction temperature for the group transfer polymerization reaction is -100 to 150°C, preferably 0 to 50°C, more preferably 10 to 30°C.

A temperature at the time of distilling away the solvent and unreacted monomer under a reduced pressure is 80 to 300°C, preferably 100 to 200°C, more preferably 120 to 180°C. Further, a pressure at the time of performing stripping is not higher than 1 atm, preferably not higher than 0.1 atm, more preferably not higher than 0.007 atm.

As the catalyst, there may be generally used one selected from an anionic catalyst, a Lewis acid catalyst and an organic molecular catalyst that are known as catalysts for group transfer polymerization.

Examples of the anionic catalyst include tris(dimethylamino)sulfonium difluorotrimethylsilicate, tris(dimethylamino)sulfonium cyanide, tetraphenylarsonium cyanide, tris(dimethylamino)sulfonium azide, tetraethylammonium azide, bis(dialkylaluminum)oxide, borontrifluoride etherate, alkali metal fluoride, alkali metal cyanide, alkali metal azide, tris(dimethylamino)sulfonium difluorotriphenylstanate, tetrabutylammonium fluoride, tetramethylammonium fluoride, tetraethylammonium cyanide, tetrabutylammonium benzoate, tetrabutylammonium bibenzoate, and tetrabutylammonium m-chlorobenzoate.

Examples of the Lewis acid catalyst include zinc iodide, zinc bromide, zinc chloride, mono and dialkylaluminum halides, and dialkylaluminum oxide.

Examples of the organic molecular catalyst include 1,3-diisopropyl-4,5-dimethylimidazol-2-ylidene, 1,3-diisopropylimidazol-2-ylidene, 1,3-di-tert-butylimidazol-2-ylidene, 1,8-diazabicyclo[5.4.0]-7-undecene, 2,8,9-trimethyl-2,5,8,9-tetraaza-1-phosphabicyclo[3.3.3]undecane, 2,8,9-triisobutyl-2,5,8,9-tetraaza-1-phosphabicyclo[3.3.3]undecane, 1-tert-butyl-2,2,4,4,4-pentakis(dimethylamino)-2λ⁵,4λ⁵-catenadi(phosphazene), 1-tert-butyl-4,4,4-tris(dimethylamino)-2,2-bis[tris(dimethylamino)-phosphoranilidenamino]-2λ⁵,4λ⁵-catenadi(phosphazene), tris(2,4,6-trimethoxyphenyl)phosphine, tris-(pentafluorophenyl)borane, triethylsilyl trifluoromethanesulfonate, triphenylcarbenium tetrakis(pentafluorophenyl)borate, trifluoromethanesulfonimide, and 1-[bis(trifluoromethanesulfonyl)methyl]-2,3,4,5,6-pentafluorobenzene.

As the reaction terminator, a compound capable of donating protons is used. Examples thereof include methanol, isopropyl alcohol, n-butyl alcohol and water.

### [Surface treatment agent for powder]

The diblock copolymer of the present invention can be favorably used as a surface treatment agent for powder that is used at the time of dispersing a powder into an oil agent, and is capable of effectively dispersing the powder into the oil agent in a uniform manner. There are no particular restrictions on such powder, examples of which may include an inorganic powder, an organic powder, a surfactant metal salt powder, a colored pigment, a pearl pigment, a metal powder pigment, a tar pigment and a natural pigment that are generally used.

Specific examples of the inorganic powder include titanium oxide, zirconium oxide, zinc oxide, cerium oxide, magnesium oxide, barium sulfate, calcium sulfate, magnesium sulfate, calcium carbonate, magnesium carbonate, talc, mica, kaolin, sericite, white mica, synthetic mica, gold mica, red mica, black mica, lithia mica, silicic acid, silicic acid anhydride, aluminum silicate, magnesium silicate, aluminum magnesium silicate, calcium silicate, barium silicate, strontium silicate, metal tungstate, hydroxyapatite, vermiculite, hydrargilite, bentonite, montmorillonite, hectorite, zeolite, ceramic powder, dicalcium phosphate, alumina, aluminum hydroxide, boron nitride, boron nitride, silica, hydrophobized silica, and silylated silica.

Examples of the organic powder include a polyamide powder, a polyacrylic acid-acrylic acid ester powder, a polyester powder, a polyethylene powder, a polypropylene powder, a polystyrene powder, a polyurethane powder, a benzoguanamine powder, a polymethyl benzoguanamine powder, a tetrafluoroethylene powder, a polymethylmethacrylate powder, a cellulose powder, a silk powder, a 12 nylon powder, and a 6 nylon powder; a crosslinked spherical dimethylpolysiloxane fine powder having a structure where dimethylpolysiloxane is crosslinked, a crosslinked spherical polymethylsilsesquioxane fine powder, and a fine powder prepared by coating the surface of a crosslinked spherical organopolysiloxane rubber with polymethylsilsesquioxane particles; various resin powders such as powders of a styrene-acrylic acid copolymer, a divinylbenzene-styrene copolymer, a vinyl resin, a urea resin, a phenolic resin, a fluorine resin, a silicon resin, an acrylic resin, a melamine resin, an epoxy resin, a polycarbonate resin and the like; and a microcrystalline fiber powder, a starch powder, a fatty acid starch derivative powder, and a lauroyl lysine powder.

Examples of the surfactant metal salt powder (metallic soap) include zinc undecylenate, aluminum isostearate, zinc stearate, aluminum stearate, calcium stearate, magnesium stearate, zinc myristate, magnesium myristate, zinc cetyl phosphate, calcium cetyl phosphate, sodium zinc cetyl phosphate, zinc palmitate, aluminum palmitate and zinc laurate.

Specific examples of the colored pigment include an inorganic red pigment such as iron oxide, iron hydroxide and iron titanate; an inorganic brown pigment such as γ-iron oxide; an inorganic yellow pigment such as yellow iron oxide and loess; an inorganic black pigment such as black iron oxide and carbon black; an inorganic purple pigment such as manganese violet and cobalt violet; an inorganic green pigment such as chromium hydroxide, chromium oxide, cobalt oxide and cobalt titanate; an inorganic blue pigment such as Prussian blue and ultramarine; a tar pigment that has been turned into a lake pigment; a natural pigment that has been turned into a lake pigment; and synthetic resin powders prepared by compounding these powders.

Specific examples of the pearl pigment include titanium oxide-coated mica, titanium oxide-coated mica, bismuth oxychloride, titanium oxide-coated bismuth oxychloride, titanium oxide-coated talc, fish scale foil and titanium oxide-coated colored mica; examples of the metal powder pigment include an aluminum powder, a copper powder and a stainless-steel powder.

Examples of the tar pigment include red No.3, red No. 104, red No. 106, red No.201, red No.202, red No.204, red No.205, red No.220, red No.226, red No.227, red No.228, red No.230, red No.401, red No.505; yellow No.4, yellow No.5, yellow No.202, yellow No.203, yellow No.204, yellow No.401; blue No.1, blue No.2, blue No.201, blue No.404; green No.3, green No.201, green No.204, green No.205; orange No.201, orange No.203, orange No.204, orange No.206, orange No.207. Examples of the natural pigment include carminic acid, laccaic acid, carthamin, brazilin and crocin.

Among these powders, as a powder to be surface treated by the diblock copolymer of the present invention, preferred are a crosslinked spherical dimethylpolysiloxane fine powder at least partially having a structure with dimethylpolysiloxane crosslinked; a crosslinked spherical polymethylsilsesquioxane fine powder; a fine powder prepared by coating the surface of a crosslinked spherical polysiloxane rubber with polymethylsilsesquioxane particles; a fine powder prepared by coating the surface of a crosslinked spherical diphenylpolysiloxane rubber with polymethylsilsesquioxane particles; and a hydrophobized silica. Further, fluorine resins and pigments are also used.

As a commercially available product(s) of these preferable powders, there may be listed, for example, KMP-590, KSP-100, KSP-101, KSP-102, KSP-105, and KSP-300 (all produced by Shin-Etsu Chemical Co., Ltd.).

As for these powders, there may also be used a compounded powder and a powder treated by, for example, a general oil agent, a silicone oil, a fluorine compound and/or a surfactant, on the premise that the effects of the present invention will not be impaired. For example, a powder may be previously subjected to a surface treatment such as a fluorine compound treatment, silicone resin treatment, pendant treatment, silane coupling agent treatment, titanium coupling agent treatment, oil agent treatment, N-acylated lysine treatment, polyacrylic acid treatment, metallic soap treatment, amino acid treatment, inorganic compound treatment, plasma treatment, and/or mechanochemical treatment. There may be employed one or more kinds thereof as necessary.

### Surface treatment method

There are no particular restrictions on a method for applying the diblock copolymer of the present invention to a powder, as a surface treatment agent for powder; the method may be performed in a similar manner as a conventional surface treatment method of a powder.

### [Dispersion; and cosmetic material, coating material and ink compositions containing such dispersion]

A dispersion of the present invention contains a powder surface treated with the diblock copolymer as the surface treatment agent for powder; and an oil agent. Such dispersion can be favorably used in, for example, a cosmetic material, a coating material or an ink; and in accordance with the use of the dispersion, the kinds of the powder and oil agent can be appropriately selected.

As the powder to be contained in the dispersion of the present invention, there may be listed the abovementioned powders.

Further, there are also no particular restrictions on the oil agent to be contained in the dispersion. There may be used any oil agent, examples of which may include one or more kinds of a silicone oil; a hydrocarbon oil; a polar oil such as a higher fatty acid, an ester oil and a natural animal or vegetable oil; a semisynthetic oil; and/or a fluorine-based oil, of which a polar oil and a silicone oil are preferred. Moreover, the oil agent may be that consisting of one or more kinds of ester oils and natural animal or vegetable oils; and one or more kinds of silicone oils. As such, even when the oil agent is that consisting of a relatively highly polar ester oil(s) and natural animal or vegetable oil(s); and a relatively low polar silicone oil(s), so long as the diblock copolymer of the present invention is employed, there can be provided a dispersion superior in dispersibility, fluidity and temporal stability since the diblock copolymer of the present invention is compatible with any of these oils.

Examples of the silicone oil include a linear or branched organopolysiloxane having a low to high viscosity, such as dimethylpolysiloxane, caprylyl methicone, phenyl trimethicone, methylphenylpolysiloxane, methylhexylpolysiloxane, methylhydrogenpolysiloxane, and a dimethylsiloxane-methylphenylsiloxane copolymer; a cyclic organopolysiloxane such as octamethylcyclotetrasiloxane, decamethylcyclopentasiloxane, dodecamethylcyclohexasiloxane, tetramethyltetrahydrogencyclotetrasiloxane, and tetramethyltetraphenylcyclotetrasiloxane; a branched organopolysiloxane such as tristrimethylsiloxymethylsilane and tetrakistrimethylsiloxysilane; a silicone rubber such as an amino-modified organopolysiloxane, a gum-like dimethylpolysiloxane with a high polymerization degree, a gum-like amino-modified organopolysiloxane, and a gum-like dimethylsiloxane-methylphenylsiloxane copolymer; a cyclic siloxane solution of a silicone gum and/or rubber; trimethylsiloxy silicic acid; a cyclic organopolysiloxane solution of trimethylsiloxy silicic acid; a higher alkoxy-modified organopolysiloxane such as stearoxy silicone; a higher fatty acid-modified organopolysiloxane; an alkyl-modified organopolysiloxane; a long-chain alkyl-modified organopolysiloxane; a fluorine-modified organopolysiloxane; a silicone resin; and a dissolved matter of a silicone resin.

Examples of the hydrocarbon oil include linear, branched and even volatile hydrocarbon oils, specific examples of which may include an ozokerite, α-olefin oligomer, light isoparaffin, isododecane, light liquid isoparaffin, squalane, synthetic squalane, vegetable squalane, squalene, ceresin, paraffin, paraffin wax, polyethylene wax, polyethylene-polypropylene wax, (ethylene/propylene/styrene)copolymer, (butylene/propylene/styrene)copolymer, liquid paraffin, liquid isoparaffin, pristane, polyisobutylene, hydrogenated polyisobutene, microcrystalline wax, and vaseline.

Examples of the higher fatty acid include lauric acid, myristic acid, palmitic acid, stearic acid, behenic acid, undecylenic acid, oleic acid, linoleic acid, linolenic acid, arachidonic acid, eicosapentaenoic acid (EPA), docosahexaenoic acid (DHA), isostearic acid, and 12-hydroxystearic acid. Examples of a higher alcohol include lauryl alcohol, myristyl alcohol, palmityl alcohol, stearyl alcohol, behenyl alcohol, hexadecyl alcohol, oleyl alcohol, isostearyl alcohol, hexyldodecanol, octyldodecanol, cetostearyl alcohol, 2-decyltetradecynol, cholesterol, phytosterol, POE cholesterol ether, monostearyl glycerin ether (batyl alcohol), and monooleyl glyceryl ether (serachyl alcohol).

Examples of the ester oil include diisobutyl adipate, 2-hexyldecyl adipate, di-2-heptylundecyl adipate, N-alkyl glycol monoisostearate, isocetyl isostearate, trimethylolpropane triisostearate, ethylene glycol di-2-ethylhexanoate, cetyl 2-ethylhexanoate, trimethylolpropane tri-2-ethylhexanoate, pentaerythritol tetra-2-ethylhexanoate, cetyl octanoate, octyldodecyl gum ester, oleyl oleate, octyldodecyl oleate, decyl oleate, neopentyl glycol dioctanoate, neopentyl glycol dicaprate, triethyl citrate, 2-ethylhexyl succinate, amyl acetate, ethyl acetate, butyl acetate, isocetyl stearate, butyl stearate, diisopropyl sebacate, di-2-ethylhexyl sebacate, cetyl lactate, myristyl lactate, isononyl isononanoate, isotridecyl isononanoate, isopropyl palmitate, 2-ethylhexyl palmitate, 2-hexyldecyl palmitate, 2-heptylundecyl palmitate, cholesteryl 12-hydroxystearate, dipentaerythritol fatty acid ester, isopropyl myristate, octyldodecyl myristate, 2-hexyldecyl myristate, myristyl myristate, hexyldecyl dimethyloctanoate, ethyl laurate, hexyl laurate, N-lauroyl-L-glutamic acid-2-octyldodecyl ester, lauroyl sarcosine isopropyl ester, and diisostearyl malate. Examples of a glyceride oil include acetoglyceryl, glyceryl triisooctanoate, glyceryl triisostearate, glyceryl triisopalmitate, glyceryl monostearate, glyceryl di-2-heptylundecanoate, glyceryl trimyristate, and diglyceryl myristate isostearate.

Further, examples of the natural animal or vegetable oil and the semisynthetic oil include an avocado oil, linseed oil, almond oil, insect wax, perilla oil, olive oil, cacao butter, kapok wax, kaya oil, carnauba wax, liver oil, candelilla wax, refined candelilla wax, beef tallow, beef foot fat, beef bone fat, hardened beef tallow, apricot kernel oil, whale wax, hardened oil, wheat germ oil, sesame oil, rice germ oil, rice bran oil, sugar cane wax, sasanqua oil, safflower oil, shea butter, Chinese wood oil, cinnamon oil, jojoba wax, squalane, squalene, shellac wax, turtle oil, soybean oil, tea seed oil, camellia oil, evening primrose oil, corn oil, lard, rapeseed oil, Japanese wood oil, bran wax, germ oil, horse fat, persic oil, palm oil, palm kernel oil, castor oil, hardened castor oil, castor oil fatty acid methyl ester, sunflower oil, grape oil, bayberry wax, jojoba oil, hydrogenated jojoba oil, macadamia nut oil, beeswax, mink oil, meadowfoam oil, cottonseed oil, cotton wax, Japan wax, Japan wax kernel oil, montan wax, coconut oil, hardened coconut oil, tri-coconut oil fatty acid glyceride, mutton tallow, peanut oil, lanolin, liquid lanolin, reduced lanolin, lanolin alcohol, hard lanolin, lanolin acetate, lanolin alcohol acetate, lanolin fatty acid isopropyl, POE lanolin alcohol ether, POE lanolin alcohol acetate, lanolin fatty acid polyethylene glycol, POE hydrogenated lanolin alcohol ether, and egg-yolk oil. Here, POE means polyoxyethylene.

Examples of the fluorine-based oil include perfluoropolyether, perfluorodecalin, and perfluorooctane.

The dispersion of the present invention can be produced by mixing, via a known method, the powder that has been treated with the surface treatment agent for powder of the present invention and an oil agent. Further, if the dispersion is to be used in a cosmetic material, a coating material or an ink, a cosmetic material composition, a coating material composition or an ink composition can each be obtained by mixing various known and common ingredients in each field. These compositions are also part of the embodiment of the present invention.

### WORKING EXAMPLES

The present invention is described in greater detail hereunder with reference to working examples; however, the present invention shall not be limited to these working examples. Here, in the examples below, unless otherwise noted, "%" in composition refers to % by mass.

### [Synthesis example 1]

Here, 39.8 mg of a tetrabutylammonium m-chlorobenzoate that had been dried under a reduced pressure was dissolved in 50 mL of THF. Under a nitrogen atmosphere, 872.0 mg of 1-methoxy-1-(trimethylsiloxy)-2-methyl-1-propene as an initiator was added to such THF solution of tetrabutylammonium m-chlorobenzoate, followed by spending an hour delivering 22.5 g of the following silicone macromer (a) thereinto by drops so as to prepare a reaction solution. This reaction solution was further stirred at room temperature for another two hours. Next, 5 min were spent delivering 3.93 g of 2-(dimethylamino)ethylmethacrylate by drops into this reaction solution, and the solution was then stirred at room temperature for an hour, followed by adding 10 mL of methanol thereinto so as to terminate the reaction. The reaction solution after the termination of the reaction was then subjected to stripping at 105°C and a reduced pressure of lower than 0.007 atm for an hour, thereby obtaining a target diblock copolymer.

Here, gel permeation chromatography (GPC) analysis was conducted at two time points which were the time point at which the group transfer polymerization of the silicone macromer (a) had finished; and a time point after the reaction was over. As a result, at each stage, there was confirmed an increase in molecular weight according to the preparation ratio between the initiator and monomer, and it was confirmed that the target diblock copolymer had been obtained.

The number average molecular weight of the diblock copolymer of the synthesis example 1 and the polydispersity of the molecular weight thereof were as follows.

Number average molecular weight (Mn)=4126, Polydispersity (Mw/Mn)=1.24, Polymerization degree ratio (n²/n¹)=1.00 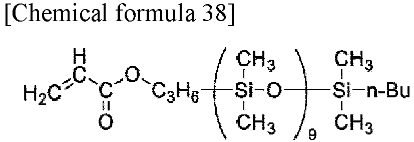 Silicone macromer (a) 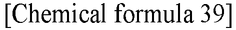 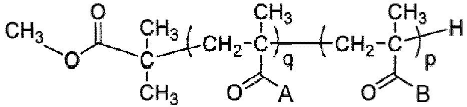 (A represents a residue of the silicone macromer (a), and B represents a residue of 2-(dimethylamino)ethylmethacrylate. The average polymerization degree q of the silicone macromer (a) is q=3.9, and the average polymerization degree p of 2-(dimethylamino)ethylmethacrylate is p=3.9.)

### [Synthesis example 2]

Here, 39.8 mg of a tetrabutylammonium m-chlorobenzoate that had been dried under a reduced pressure was dissolved in 50 mL of THF. Under a nitrogen atmosphere, 872.0 mg of 1-methoxy-1-(trimethylsiloxy)-2-methyl-1-propene as an initiator was added to such THF solution of tetrabutylammonium m-chlorobenzoate, followed by spending 30 min delivering 22.5 g of the silicone macromer (a) thereinto by drops so as to prepare a reaction solution. This reaction solution was further stirred at room temperature for another hour. Next, 30 min were spent delivering 4.6 g of 2-(diethylamino)ethylmethacrylate by drops into this reaction solution, and the solution was then stirred at room temperature for an hour, followed by adding 10 mL of methanol thereinto so as to terminate the reaction. The reaction solution after the termination of the reaction was then subjected to stripping at 105°C and a reduced pressure of lower than 0.007 atm for an hour, thereby obtaining a target diblock copolymer.

In a similar manner as the synthesis example 1, it was confirmed that the product obtained was a diblock copolymer. The number average molecular weight of the diblock copolymer of the synthesis example 2 and the polydispersity of the molecular weight thereof were as follows.

Number average molecular weight (Mn)=4187, Polydispersity (Mw/Mn)=1.18, Polymerization degree ratio (n²/n¹)=1.00 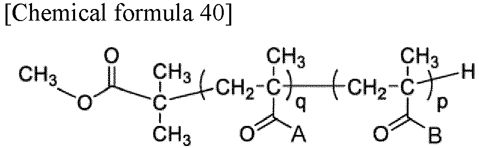 (A represents a residue of the silicone macromer (a), and B represents a residue of 2-(diethylamino)ethylmethacrylate. The average polymerization degree q of the silicone macromer (a) is q=3.8, and the average polymerization degree p of 2-(diethylamino)ethylmethacrylate is p=3.8.)

### [Synthesis example 3]

Here, 19.9 mg of a tetrabutylammonium m-chlorobenzoate that had been dried under a reduced pressure was dissolved in 25 mL of THF. Under a nitrogen atmosphere, 436.0 mg of 1-methoxy-1-(trimethylsiloxy)-2-methyl-1-propene as an initiator was added to such THF solution of tetrabutylammonium m-chlorobenzoate, followed by spending 30 min delivering 7.5 g of the silicone macromer (a) thereinto by drops so as to prepare a reaction solution. This reaction solution was further stirred at room temperature for another hour. Next, 30 min were spent delivering 7.5 g of 2-ethoxyethyl (meth)acrylate by drops into this reaction solution, and the solution was then stirred at room temperature for an hour, followed by adding 5 mL of methanol thereinto so as to terminate the reaction. The reaction solution after the termination of the reaction was then subjected to stripping at 105°C and a reduced pressure of lower than 0.007 atm for an hour, thereby obtaining a target diblock copolymer.

In a similar manner as the synthesis example 1, it was confirmed that the product obtained was a diblock copolymer. The number average molecular weight of the diblock copolymer of the synthesis example 3 and the polydispersity of the molecular weight thereof were as follows.

Number average molecular weight (Mn)=10568, Polydispersity (Mw/Mn)=1.10, Polymerization degree ratio (n²/n¹)=0.18 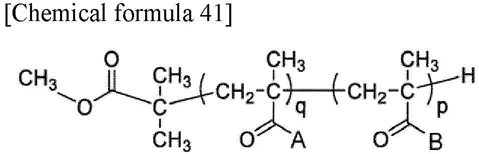 (A represents a residue of the silicone macromer (a), and B represents a residue of 2-ethoxyethyl (meth)acrylate. The average polymerization degree q of the silicone macromer (a) is q=32.8, and the average polymerization degree p of 2-ethoxyethyl (meth)acrylate is p=6.0.)

### [Synthesis example 4]

Here, 19.9 mg of a tetrabutylammonium m-chlorobenzoate that had been dried under a reduced pressure was dissolved in 25 mL of THF. Under a nitrogen atmosphere, 436.0 mg of 1-methoxy-1-(trimethylsiloxy)-2-methyl-1-propene as an initiator was added to such THF solution of tetrabutylammonium m-chlorobenzoate, followed by spending 30 min delivering 7.3 g of the silicone macromer (a) thereinto by drops so as to prepare a reaction solution. This reaction solution was further stirred at room temperature for another hour. Next, 30 min were spent delivering 7.7 g of 2-(methoxyethoxy)ethyl (meth)acrylate by drops into this reaction solution, and the solution was then stirred at room temperature for an hour, followed by adding 5 mL of methanol thereinto so as to terminate the reaction. The reaction solution after the termination of the reaction was then subjected to stripping at 105°C and a reduced pressure of lower than 0.007 atm for an hour, thereby obtaining a target diblock copolymer.

In a similar manner as the synthesis example 1, it was confirmed that the product obtained was a diblock copolymer. The number average molecular weight of the diblock copolymer of the synthesis example 4 and the polydispersity of the molecular weight thereof were as follows.

Number average molecular weight (Mn)=7985, Polydispersity (Mw/Mn)=1.11, Polymerization degree ratio (n²/n¹)=0.23 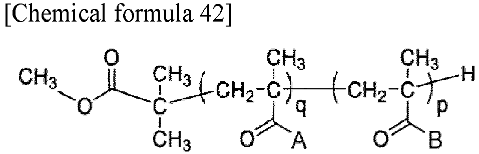 (A represents a residue of the silicone macromer (a), and B represents a residue of 2-(methoxyethoxy)ethyl (meth)acrylate. The average polymerization degree q of the silicone macromer (a) is q=20.2, and the average polymerization degree p of 2-(methoxyethoxy)ethyl (meth)acrylate is p=4.6.)

### [Synthesis example 5]

Here, 19.9 mg of a tetrabutylammonium m-chlorobenzoate that had been dried under a reduced pressure was dissolved in 25 mL of THF. Under a nitrogen atmosphere, 436.0 mg of 1-methoxy-1-(trimethylsiloxy)-2-methyl-1-propene as an initiator was added to such THF solution of tetrabutylammonium m-chlorobenzoate, followed by spending 30 min delivering 7.5 g of the silicone macromer (a) thereinto by drops so as to prepare a reaction solution. This reaction solution was further stirred at room temperature for another hour. Next, 15 min were spent delivering 6.9 g of the following monomer (b) by drops into this reaction solution, and the solution was then stirred at room temperature for two hours, followed by adding 5 mL of methanol thereinto so as to terminate the reaction. The reaction solution after the termination of the reaction was then subjected to stripping at 105°C and a reduced pressure of lower than 0.007 atm for an hour, thereby obtaining a target diblock copolymer.

In a similar manner as the synthesis example 1, it was confirmed that the product obtained was a diblock copolymer. The number average molecular weight of the diblock copolymer of the synthesis example 5 and the polydispersity of the molecular weight thereof were as follows.

Number average molecular weight (Mn)=8150, Polydispersity (Mw/Mn)=1.13, Polymerization degree ratio (n²/n¹)=1.00 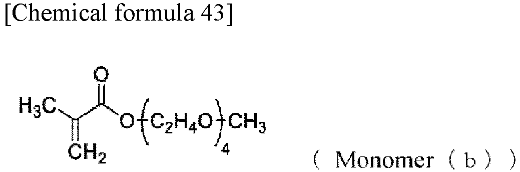 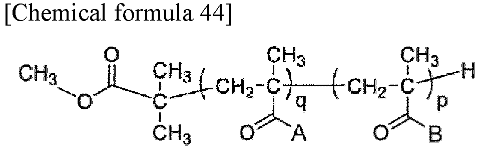 (A represents a residue of the silicone macromer (a), and B represents a residue of the monomer (b). The average polymerization degree q of the silicone macromer (a) is q=6.9, and the average polymerization degree p of the monomer (b) is p=6.9.)

### [Synthesis example 6]

Here, 39.8 mg of a tetrabutylammonium m-chlorobenzoate that had been dried under a reduced pressure was dissolved in 50 mL of THF. Under a nitrogen atmosphere, 872.0 mg of 1-methoxy-1-(trimethylsiloxy)-2-methyl-1-propene as an initiator was added to such THF solution of tetrabutylammonium m-chlorobenzoate, followed by spending an hour delivering 22.5 g of the silicone macromer (a) thereinto by drops so as to prepare a reaction solution. This reaction solution was further stirred at room temperature for another two hours. Next, 30 min were spent delivering 12.4 g of the following monomer (c) by drops into this reaction solution, and the solution was then stirred at room temperature for five hours, followed by adding 10 mL of methanol thereinto so as to terminate the reaction. The reaction solution after the termination of the reaction was then subjected to stripping at 105°C and a reduced pressure of lower than 0.007 atm for an hour, thereby obtaining a target diblock copolymer.

In a similar manner as the synthesis example 1, it was confirmed that the product obtained was a diblock copolymer. The number average molecular weight of the diblock copolymer of the synthesis example 6 and the polydispersity of the molecular weight thereof were as follows.

Number average molecular weight (Mn)=9294, Polydispersity (Mw/Mn)=1.13, Polymerization degree ratio (n²/n¹)=1.00 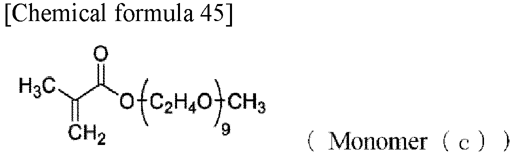 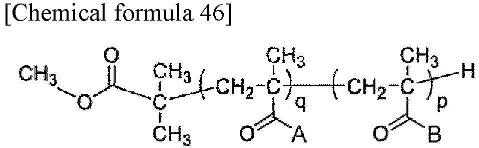 (A represents a residue of the silicone macromer (a), and B represents a residue of the monomer (c). The average polymerization degree q of the silicone macromer (a) is q=6.7, and the average polymerization degree p of the monomer (c) is p=6.7.)

### [Synthesis example 7]

Here, 39.8 mg of a tetrabutylammonium m-chlorobenzoate that had been dried under a reduced pressure was dissolved in 50 mL of THF. Under a nitrogen atmosphere, 872.0 mg of 1-methoxy-1-(trimethylsiloxy)-2-methyl-1-propene as an initiator was added to such THF solution of tetrabutylammonium m-chlorobenzoate, followed by spending 30 min delivering 57.5 g of the following silicone macromer (b) thereinto by drops so as to prepare a reaction solution. This reaction solution was further stirred at room temperature for another hour. Next, 30 min were spent delivering 3.93 g of 2-(dimethylamino)ethylmethacrylate by drops into this reaction solution, and the solution was then stirred at room temperature for an hour, followed by adding 10 mL of methanol thereinto so as to terminate the reaction. The reaction solution after the termination of the reaction was then subjected to stripping at 105°C and a reduced pressure of lower than 0.007 atm for an hour, thereby obtaining a target diblock copolymer.

In a similar manner as the synthesis example 1, it was confirmed that the product obtained was a diblock copolymer. The number average molecular weight of the diblock copolymer of the synthesis example 7 and the polydispersity of the molecular weight thereof were as follows.

Number average molecular weight (Mn)=7070, Polydispersity (Mw/Mn)=1.94, Polymerization degree ratio (n²/n¹)=1.00 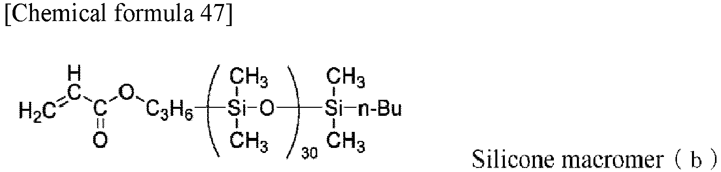 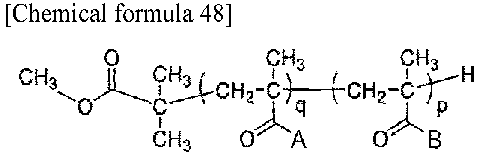 (A represents a residue of the silicone macromer (b), and B represents a residue of 2-(dimethylamino)ethylmethacrylate. The average polymerization degree q of the silicone macromer (b) is q=2.9, and the average polymerization degree p of 2-(dimethylamino)ethylmethacrylate is p=2.9.)

### [Synthesis example 8]

Here, 19.9 mg of a tetrabutylammonium m-chlorobenzoate that had been dried under a reduced pressure was dissolved in 25 mL of THF. Under a nitrogen atmosphere, 436.0 mg of 1-methoxy-1-(trimethylsiloxy)-2-methyl-1-propene as an initiator was added to such THF solution of tetrabutylammonium m-chlorobenzoate, followed by spending 10 min delivering 6.4 g of the following silicone macromer (c) thereinto by drops so as to prepare a reaction solution. This reaction solution was further stirred at room temperature for another hour. Next, 1 min was spent delivering 0.94 g of 2-(diethylamino)ethylmethacrylate by drops into this reaction solution, and the solution was then stirred at room temperature for an hour, followed by adding 5 mL of methanol thereinto so as to terminate the reaction. The reaction solution after the termination of the reaction was then subjected to stripping at 105°C and a reduced pressure of lower than 0.007 atm for an hour, thereby obtaining a target diblock copolymer.

In a similar manner as the synthesis example 1, it was confirmed that the product obtained was a diblock copolymer. The number average molecular weight of the diblock copolymer of the synthesis example 8 and the polydispersity of the molecular weight thereof were as follows.

Number average molecular weight (Mn)=2545, Polydispersity (Mw/Mn)=1.17, Polymerization degree ratio (n²/n¹)=0.36 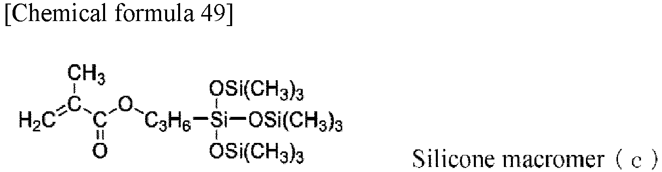 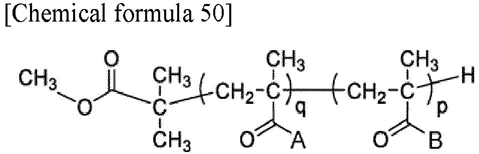 (A represents a residue of the silicone macromer (c), and B represents a residue of 2-(diethylamino)ethylmethacrylate. The average polymerization degree q of the silicone macromer (c) is q=5.0, and the average polymerization degree p of 2-(diethylamino)ethylmethacrylate is p=1.8.)

### [Comparative synthesis example 1]

Here, 39.8 mg of a tetrabutylammonium m-chlorobenzoate that had been dried under a reduced pressure was dissolved in 50 mL of THF. Under a nitrogen atmosphere, 872.0 mg of 1-methoxy-1-(trimethylsiloxy)-2-methyl-1-propene as an initiator was added to such THF solution of tetrabutylammonium m-chlorobenzoate, followed by spending 30 min delivering 22.5 g of the silicone macromer (a) thereinto by drops so as to prepare a reaction solution. This reaction solution was further stirred at room temperature for another two hours. Next, 5 min were spent delivering 3.6 g of isobutyl methacrylate by drops into this reaction solution, and the solution was then stirred at room temperature for an hour, followed by adding 10 mL of methanol thereinto so as to terminate the reaction. The reaction solution after the termination of the reaction was then subjected to stripping at 105°C and a reduced pressure of lower than 0.007 atm for an hour, thereby obtaining a target diblock copolymer.

In a similar manner as the synthesis example 1, it was confirmed that the product obtained was a diblock copolymer. The number average molecular weight of the diblock copolymer of the comparative synthesis example 1 and the polydispersity of the molecular weight thereof were as follows.

Number average molecular weight (Mn)=5302, Polydispersity (Mw/Mn)=1.32, Polymerization degree ratio (n²/n¹)=1.00 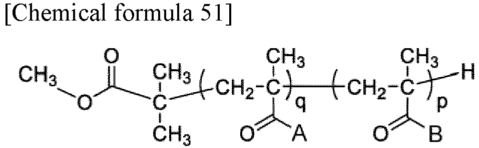 (A represents a residue of the silicone macromer (a), and B represents a residue of isobutyl methacrylate. The average polymerization degree q of the silicone macromer (a) is q=5.1, and the average polymerization degree p of isobutyl methacrylate is p=5.1.)

### [Comparative synthesis example 2]

Here, 19.9 mg of a tetrabutylammonium m-chlorobenzoate that had been dried under a reduced pressure was dissolved in 25 mL of THF. Under a nitrogen atmosphere, 436.0 mg of 1-methoxy-1-(trimethylsiloxy)-2-methyl-1-propene as an initiator was added to such THF solution of tetrabutylammonium m-chlorobenzoate, followed by spending 30 min delivering 13.99 g of the silicone macromer (a) thereinto by drops so as to prepare a reaction solution. This reaction solution was further stirred at room temperature for another hour. Next, 30 min were spent delivering 1.57 g of 2-(trimethylsilyloxy)ethylmethacrylate by drops into this reaction solution, and the solution was then stirred at room temperature for an hour, followed by adding 5 mL of methanol thereinto so as to terminate the reaction. The reaction solution after the termination of the reaction was then subjected to stripping at 105°C and a reduced pressure of lower than 0.007 atm for an hour, thereby obtaining a target diblock copolymer.

In a similar manner as the synthesis example 1, it was confirmed that the product obtained was a diblock copolymer. The number average molecular weight of the diblock copolymer of the comparative synthesis example 2 and the polydispersity of the molecular weight thereof were as follows.

Number average molecular weight (Mn)=9418, Polydispersity (Mw/Mn)=1.11, Polymerization degree ratio (n²/n¹)=2.00 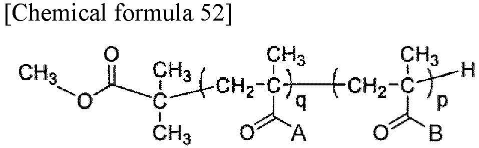 (A represents a residue of the silicone macromer (a), and B represents a residue of 2-(trimethylsilyloxy)ethylmethacrylate. The average polymerization degree q of the silicone macromer (a) is q=3.1, and the average polymerization degree p of 2-(trimethylsilyloxy)ethylmethacrylate is p=6.2.)

### [Comparative synthesis example 3]

Here, 39.8 mg of a tetrabutylammonium m-chlorobenzoate that had been dried under a reduced pressure was dissolved in 50 mL of THF. Under a nitrogen atmosphere, 436.0 mg of 1-methoxy-1-(trimethylsiloxy)-2-methyl-1-propene as an initiator was added to such THF solution of tetrabutylammonium m-chlorobenzoate, followed by spending 30 min delivering 22.5 g of the silicone macromer (a) thereinto by drops so as to prepare a reaction solution. This reaction solution was further stirred at room temperature for another hour. Next, 30 min were spent delivering 4.2 g of cyclohexyl methacrylate by drops into this reaction solution, and the solution was then stirred at room temperature for an hour, followed by adding 5 mL of methanol thereinto so as to terminate the reaction. The reaction solution after the termination of the reaction was then subjected to stripping at 105°C and a reduced pressure of lower than 0.007 atm for an hour, thereby obtaining a target diblock copolymer.

In a similar manner as the synthesis example 1, it was confirmed that the product obtained was a diblock copolymer. The number average molecular weight of the diblock copolymer of the comparative synthesis example 3 and the polydispersity of the molecular weight thereof were as follows.

Number average molecular weight (Mn)=15046, Polydispersity (Mw/Mn)=1.10, Polymerization degree ratio (n²/n¹)=1.00 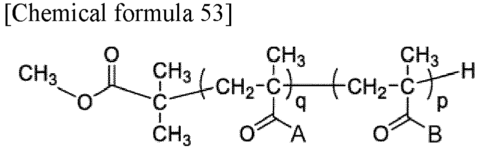 (A represents a residue of the silicone macromer (a), and B represents a residue of cyclohexyl methacrylate. The average polymerization degree q of the silicone macromer (a) is q=14.1, and the average polymerization degree p of cyclohexyl methacrylate is p=14.1.)

### [Comparative synthesis example 4]

Here, 39.8 mg of a tetrabutylammonium m-chlorobenzoate that had been dried under a reduced pressure was dissolved in 50 mL of THF. Under a nitrogen atmosphere, 873.0 mg of 1-methoxy-1-(trimethylsiloxy)-2-methyl-1-propene as an initiator was added to such THF solution of tetrabutylammonium m-chlorobenzoate, followed by spending 30 min delivering 11.3 g of the silicone macromer (a) thereinto by drops so as to prepare a reaction solution. This reaction solution was further stirred at room temperature for another two hours. Later, 15 min were spent delivering 3.93 g of 2-(dimethylamino)ethylmethacrylate by drops into this reaction solution, and the solution was then stirred at room temperature for an hour. Next, 30 min were spent delivering 11.3 g of the silicone macromer (a) thereinto by drops, and the solution was further stirred at room temperature for another two hours, followed by adding 10 mL of methanol thereinto so as to terminate the reaction. The reaction solution after the termination of the reaction was then subjected to stripping at 105°C and a reduced pressure of lower than 0.007 atm for an hour, thereby obtaining a target triblock copolymer.

GPC analysis was conducted in a similar manner as the synthesis example 1 at three time points which were the time point at which the first round of group transfer polymerization of the silicone macromer (a) had finished; the time point at which the group transfer polymerization of 2-(dimethylamino)ethylmethacrylate had finished; and a time point after the reaction was over. As a result, at each stage, there was confirmed an increase in molecular weight according to the preparation ratio between the initiator and monomer, and it was confirmed that a triblock copolymer had been obtained. The number average molecular weight of the triblock copolymer of the comparative synthesis example 4 and the polydispersity of the molecular weight thereof were as follows.

Number average molecular weight (Mn)=4690, Polydispersity (Mw/Mn)=1.61 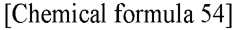 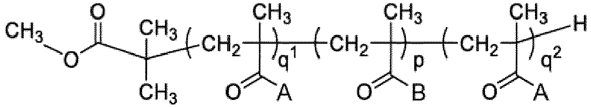 (A represents a residue of the silicone macromer (a), and B represents a residue of 2-(dimethylamino)ethylmethacrylate. The average polymerization degree q1, q2 of the silicone macromer (a) is q1=q2=2.2, and the average polymerization degree p of 2-(dimethylamino)ethylmethacrylate is p=4.4.)

### [Comparative synthesis example 5]

Here, 39.8 mg of a tetrabutylammonium m-chlorobenzoate that had been dried under a reduced pressure was dissolved in 50 mL of THF. Under a nitrogen atmosphere, 873 mg of 1-methoxy-1-(trimethylsiloxy)-2-methyl-1-propene as an initiator was added to such THF solution of tetrabutylammonium m-chlorobenzoate, followed by spending 10 min delivering 1.97 g of 2-(dimethylamino)ethylmethacrylate thereinto by drops so as to prepare a reaction solution. This reaction solution was further stirred at room temperature for another hour. Later, an hour was spent delivering 22.5 g of the silicone macromer (a) by drops into this reaction solution, and the solution was then stirred at room temperature for two hours. Next, 10 min were spent delivering 1.97 g of 2-(dimethylamino)ethylmethacrylate thereinto by drops, and the solution was further stirred at room temperature for another hour, followed by adding 10 mL of methanol thereinto so as to terminate the reaction. The reaction solution after the termination of the reaction was then subjected to stripping at 105°C and a reduced pressure of lower than 0.007 atm for an hour, thereby obtaining a target triblock copolymer.

GPC analysis was conducted in a similar manner as the synthesis example 1 at three time points which were the time point at which the first round of group transfer polymerization of 2-(dimethylamino)ethylmethacrylate had finished; the time point at which the group transfer polymerization of the silicone macromer (a) had finished; and a time point after the reaction was over. As a result, at each stage, there was confirmed an increase in molecular weight according to the preparation ratio between the initiator and monomer, and it was confirmed that a triblock copolymer had been obtained. The number average molecular weight of the triblock copolymer of the comparative synthesis example 5 and the polydispersity of the molecular weight thereof were as follows.

Number average molecular weight (Mn)=4570, Polydispersity (Mw/Mn)=1.50 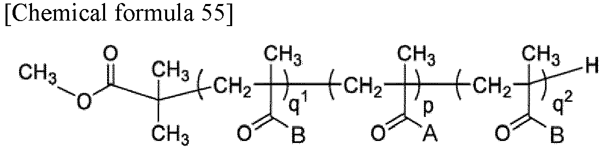 (A represents a residue of the silicone macromer (a), and B represents a residue of 2-(dimethylamino)ethylmethacrylate. The average polymerization degree q1, q2 of 2-(dimethylamino)ethylmethacrylate is q1=q2=2.2, and the average polymerization degree p of the silicone macromer (a) is p=4.4.)

### [Comparative synthesis example 6]

Here, 39.8 mg of a tetrabutylammonium m-chlorobenzoate that had been dried under a reduced pressure was dissolved in 50 mL of THF. Under a nitrogen atmosphere, 872.0 mg of 1-methoxy-1-(trimethylsiloxy)-2-methyl-1-propene as an initiator was added to such THF solution of tetrabutylammonium m-chlorobenzoate, followed by spending an hour delivering a monomer mixture (22.5 g of the silicone macromer (a), 3.93 g of 2-(dimethylamino)ethylmethacrylate) thereinto by drops so as to prepare a reaction solution. This reaction solution was further stirred at room temperature for another two hours, followed by adding 10 mL of methanol thereinto so as to terminate the reaction. The reaction solution after the termination of the reaction was then subjected to stripping at 105°C and a reduced pressure of lower than 0.007 atm for an hour, thereby obtaining a random copolymer. The number average molecular weight of the random copolymer of the comparative synthesis example 6 and the polydispersity of the molecular weight thereof were as follows.

Number average molecular weight (Mn)=4059, Polydispersity (Mw/Mn)=1.80 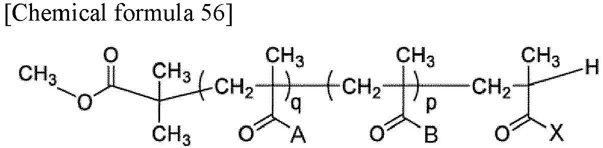 (A represents a residue of the silicone macromer (a), and B represents a residue of 2-(dimethylamino)ethylmethacrylate. The average polymerization degree q of the silicone macromer (a) is q=3.8, and the average polymerization degree p of 2-(dimethylamino)ethylmethacrylate is p=3.8. Further, X represents a residue of the silicone macromer (a) or 2-(dimethylamino)ethylmethacrylate; the one polymerization degree associated with the X-containing unit is included in the average polymerization degree represented by q (i.e. 3.8) if X is a residue of the silicone macromer (a), and is included in the average polymerization degree represented by p (i.e. 3.8) if X is a residue of 2-(dimethylamino)ethylmethacrylate.)

### [Dispersibility evaluation]

Viscosity was measured after preparing a slurry using a bead mill and with the prescriptions shown in Tables 1 and 2. The unit is mPa s.

Here, the viscosity is a value measured by a B-type viscometer (model TVB-10 by Toki Sangyo Co., Ltd) at 25°C, in accordance with a method described in JIS K 7117-1:1999.

**[Table 1]**

| | | Working example | | | | | | | | | |
|---|---|---|---|---|---|---|---|---|---|---|---|
| | | 1 | 2 | 3 | 4 | 5 | 6 | 7 | 8 | 9 | 10 |
| Diblock copolymer | Synthesis example 1 | 10 | 5 | | | | | | | | |
| | Synthesis example 2 | | | 10 | | | | 5 | | | |
| | Synthesis example 3 | | | | 10 | | | | 5 | | |
| | Synthesis example 4 | | | | | 10 | | | | 5 | |
| | Synthesis example 5 | | | | | | 10 | | | | 5 |
| | Comparative synthesis example 1 | | | | | | | | | | |
| | Comparative synthesis example 2 | | | | | | | | | | |
| | Comparative synthesis example 3 | | | | | | | | | | |
| Triblock copolymer | Comparative synthesis example 4 | | | | | | | | | | |
| | Comparative synthesis example 5 | | | | | | | | | | |
| Random copolymer | Comparative synthesis example 6 | | | | | | | | | | |
| Fine-particle titanium oxide ∗1 | | 40 | | 40 | 40 | 40 | 40 | | | | |
| Fine-particle zinc oxide ∗2 | | | 60 | | | | | 60 | 60 | 60 | 60 |
| Decamethylcyclopentasiloxane | | 50 | 35 | 50 | 50 | 50 | 50 | 35 | 35 | 35 | 35 |
| Viscosity [Pa.s] | Immediately after preparation | 81 | 389 | 579 | 3830 | 2775 | 52 | 1243 | 1447 | 604 | 417 |
| | After one month | 86 | 284 | 579 | 5779 | 3260 | 139 | 1480 | 1770 | 616 | 475 |

| | | | | | | | | | | | |
|---|---|---|---|---|---|---|---|---|---|---|---|
| (^{∗}1) MTR07 (by TAYCA Co., Ltd.) (^{∗}2) MZ506X (by TAYCA Co., Ltd.) | | | | | | | | | | | |

**[Table 2]**

| | | Comparative example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Diblock copolymer | Synthesis example 1 | | | | | | | | | | | | |
| | Synthesis example 2 | | | | | | | | | | | | |
| | Synthesis example 3 | | | | | | | | | | | | |
| | Synthesis example 4 | | | | | | | | | | | | |
| | Synthesis example 5 | | | | | | | | | | | | |
| | Comparative synthesis example 1 | | | | | | | 10 | | | 5 | | |
| | Comparative synthesis example 2 | | | | | | | | 10 | | | 5 | |
| | Comparative synthesis example 3 | | | | | | | | | 10 | | | 5 |
| Triblock copolymer | Comparative synthesis example 4 | 10 | | | 5 | | | | | | | | |
| | Comparative synthesis example 5 | | 10 | | | 5 | | | | | | | |
| Random copolymer | Comparative synthesis example 6 | | | 10 | | | 5 | | | | | | |
| Fine-particle titanium oxide ∗1 | | 40 | 40 | 40 | 60 | 60 | 60 | 40 | 40 | 40 | 60 | 60 | 60 |
| Fine-particle zinc oxide *2 | | | | | | | | | | | | | |
| Decamethylcyclopentasiloxane | | 50 | 50 | 50 | 35 | 35 | 35 | 50 | 50 | 50 | 35 | 35 | 35 |
| Viscosity [Pa·s] | Immediately after preparation | 801 | 160 | 71 | 1381 | 2066 | 440 | 4880 | 2356 | 2743 | 1661 | 2439 | 2243 |
| | After one month | × | × | × | × | × | × | × | × | × | × | × | × |

| | | | | | | | | | | | | | |
|---|---|---|---|---|---|---|---|---|---|---|---|---|---|
| (^{∗}1) MTR07 (by TAYACA Co., Ltd.) (^{∗}2) MZ506X (by TAYCA Co., Ltd.) 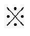 Viscosity after one month that was evaluated as × indicates that measurement was impossible due to loss of fluidity. | | | | | | | | | | | | | |

As clearly shown by the results in Tables 1 and 2, the diblock copolymer of the present invention has a higher dispersibility as compared to a triblock copolymer and a random copolymer, and can thus be used to prepare a low-viscosity dispersion with an even higher preservation stability.

Further, it became clear that by using the diblock copolymer as a surface treatment agent for powder, there can be prepared a dispersion whose viscosity is low immediately after its preparation. Moreover, the following became clear. In the cases of the comparative examples 7 to 9 and 10 to 12 where surface treatment agents employing non-polar monomers as building blocks were used, fluidity was lost in one month after the preparation. In contrast, in the cases of the working examples 1 to 10 where surface treatment agents having polar monomers as building blocks were used, dispersions with low viscosities were able to be prepared; especially, in the cases of the working examples 1 and 10 where surface treatment agents having highly polar monomers as building blocks were used, dispersions with particularly low viscosities were able to be prepared.

From the above results, it became clear that a diblock copolymer having polar monomers as building blocks is particularly useful as a surface treatment agent for powder.

## Claims

1. A diblock copolymer whose main chain is comprised of a silicone graft copolymer block represented by a formula [I] and a polar copolymer block represented by a formula [II], wherein one end structure of the main chain is represented by a formula [III], and the other end structure of the main chain is represented by a formula [IV], the formula [I] being expressed as 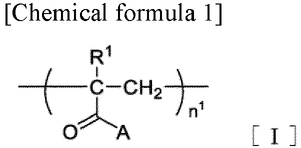
wherein R¹ represents a hydrogen atom or a methyl group,
A represents an organopolysiloxane-containing group represented by a general formula (1) or an organopolysiloxane-containing group represented by a general formula (2),
n¹ represents a number of repeating units and satisfies 1≤ n¹ ≤50,
wherein the general formula (1) is expressed as 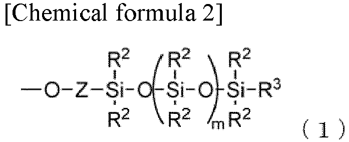
wherein the organopolysiloxane-containing group represented by the general formula (1) has a linear organopolysiloxane structure where a repeating unit number m is 0 to 100,
Z represents a divalent organic group,
each R² independently represents a saturated hydrocarbon group having 1 to 10 carbon atoms or a phenyl group,
R³ represents a saturated hydrocarbon group having 1 to 10 carbon atoms,
m is a number of 0 to 100, and
wherein the general formula (2) is expressed as
[Chemical formula 3]
-O-Lⁱ (2)
wherein the organopolysiloxane-containing group represented by the general formula (2) has a dendritic organopolysiloxane structure whose hierarchical number c is 1 to 10,
Lⁱ is a silylorgano group represented by a general formula (3),
i represents a number of each hierarchy of the dendritic structure and is each integer from 1 to c in both the general formulae (2) and (3), and is 1 in the general formula (2),
wherein the general formula (3) is expressed as 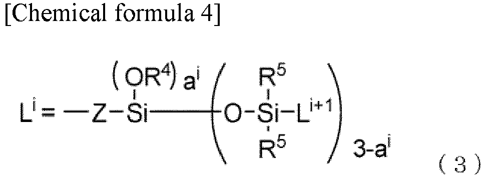
wherein Z represents a divalent organic group,
R⁴ represents a saturated hydrocarbon group having 1 to 10 carbon atoms or a phenyl group,
each R⁵ independently represents an alkyl group having 1 to 8 carbon atoms or a phenyl group,
Lⁱ⁺¹ is the silylorgano group L' represented by the general formula (3) when the hierarchy i is lower than c (lower than the uppermost hierarchy); and is a hydrogen atom, a saturated hydrocarbon group having 1 to 10 carbon atoms or a phenyl group, when the hierarchy i is i=c (the uppermost hierarchy),
a' represents the number of OR⁴ groups in the hierarchy i and is a number of 0 to 3;
the formula [II] being expressed as 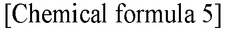 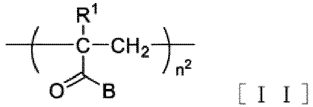
wherein R¹ represents a hydrogen atom or a methyl group,
B is any group selected from -OB', -NH₂ and -OH (B' represents a monovalent hydrocarbon group that has 1 to 20 carbon atoms, and has at least one kind of divalent group selected from a polyoxyalkylene group having 1 to 20 carbon atoms, -C(O)-, -O-, -S- and -NR-(R represents a hydrogen atom or a monovalent hydrocarbon group having 1 to 20 carbon atoms)),
n² represents a number of repeating units and satisfies 1≤ n²≤50; the formula [III]
being expressed as 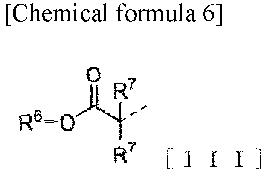
wherein R⁶ represents an alkyl group having 1 to 4 carbon atoms,
each R⁷ independently represents a hydrogen atom or an alkyl group having 1 to 4
carbon atoms; the formula [IV] being expressed as 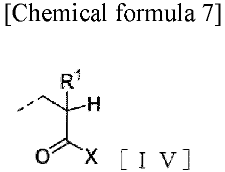
wherein R¹ represents a hydrogen atom or a methyl group,
X represents the group represented by A in the formula [I] or the group represented by B in the formula [II].

2. The diblock copolymer according to claim 1, wherein B in the formula [II] is a group represented by the following formula (8') or (9')
[Chemical formulae 8]
-O-CH₂-CH₂-N (R⁷)₂ (8')
-O- (C₂H₄O)_{n³}-R³ (9')
wherein in the formula (8'), each R⁷ independently represents a hydrogen atom or an alkyl group having 1 to 4 carbon atoms; in the formula (9'), R³ represents a saturated hydrocarbon group having 1 to 10 carbon atoms, and n³ represents a number of repeating units and satisfies 1≤n³≤10.

3. The diblock copolymer according to claim 1 or 2, wherein the divalent organic group represented by Z in the general formulae (2) and (3) is a saturated hydrocarbon group having 2 to 12 carbon atoms.

4. The diblock copolymer according to any one of claims 1 to 3, wherein n²/n¹ is 0.02 to 10.

5. A diblock copolymer production method for producing the diblock copolymer according to any one of claims 1 to 4, wherein the method uses a compound represented by a general formula (4) as an initiator, and comprises:
a step of performing group transfer polymerization on a monomer represented by a general formula (5); and
a step of performing group transfer polymerization on a polar monomer represented by a general formula (6), the general formula (4) being expressed as 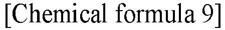 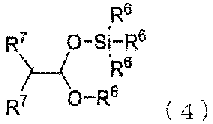
wherein each R⁶ independently represents an alkyl group having 1 to 4 carbon atoms,
each R⁷ independently represents a hydrogen atom or an alkyl group having 1 to 4 carbon atoms; the general formula (5) being expressed as 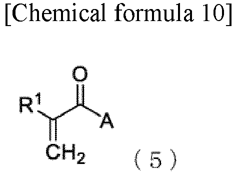
wherein R¹ represents a hydrogen atom or a methyl group,
A represents an organopolysiloxane-containing group represented by a general formula (1) or an organopolysiloxane-containing group represented by a general formula (2),
wherein the general formula (1) is expressed as 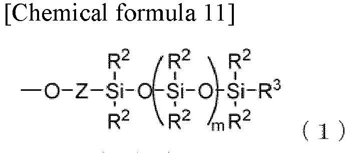
wherein the organopolysiloxane-containing group represented by the general formula (1) has a linear organopolysiloxane structure where a repeating unit number m is 0 to 100,
Z represents a divalent organic group,
each R² independently represents a saturated hydrocarbon group having 1 to 10 carbon atoms or a phenyl group,
R³ represents a saturated hydrocarbon group having 1 to 10 carbon atoms,
m is a number of 0 to 100, and
wherein the general formula (2) is expressed as
[Chemical formula 12]
-O-Lⁱ (2)
wherein the organopolysiloxane-containing group represented by the general formula (2) has a dendritic organopolysiloxane structure whose hierarchical number c is 1 to 10,
Lⁱ is a silylorgano group represented by a general formula (3),
i represents a number of each hierarchy of the dendritic structure and is each integer from 1 to c in both the general formulae (2) and (3), and is 1 in the general formula (2),
wherein the general formula (3) is expressed as 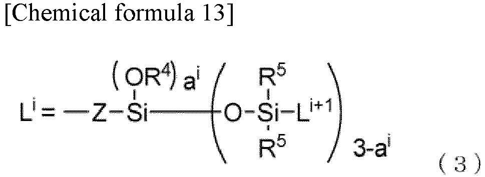
wherein Z represents a divalent organic group,
R⁴ represents a saturated hydrocarbon group having 1 to 10 carbon atoms or a phenyl group,
each R⁵ independently represents an alkyl group having 1 to 8 carbon atoms or a phenyl group,
Lⁱ⁺¹ is the silylorgano group L' represented by the general formula (3) when the hierarchy i is lower than c (lower than the uppermost hierarchy); and is a hydrogen atom, a saturated hydrocarbon group having 1 to 10 carbon atoms or a phenyl group, when the hierarchy i is i=c (the uppermost hierarchy),
a' represents the number of OR⁴ groups in the hierarchy i and is a number of 0 to 3; the general formula (6) being expressed as 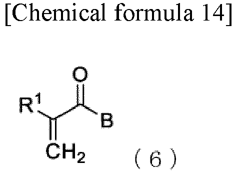
wherein R¹ represents a hydrogen atom or a methyl group,
B is any group selected from -OB', -NH₂ and -OH (B' represents a monovalent hydrocarbon group that has 1 to 20 carbon atoms, and has at least one kind of divalent group selected from a polyoxyalkylene group having 1 to 20 carbon atoms, -C(O)-, -O-, -S- and -NR-(R represents a hydrogen atom or a monovalent hydrocarbon group having 1 to 20 carbon atoms)).

6. The diblock copolymer production method according to claim 5, wherein the polar monomer represented by the general formula (6) is a polar monomer represented by the following general formula (8) or (9), the formula (8) being expressed as 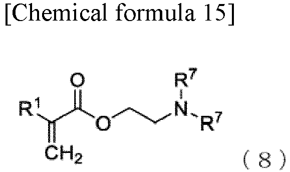
wherein R¹ represents a hydrogen atom or a methyl group,
each R⁷ independently represents a hydrogen atom or an alkyl group having 1 to 4 carbon atoms; the formula (9) being expressed as 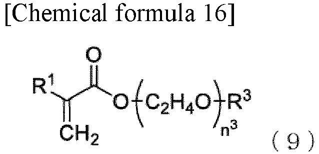
wherein R¹ represents a hydrogen atom or a methyl group,
R³ represents a saturated hydrocarbon group having 1 to 10 carbon atoms,
n³ represents a number of repeating units and satisfies 1≤n³≤10.

7. The diblock copolymer production method according to claim 6, wherein the polar monomer represented by the general formula (8) is a polar monomer represented by the following formula (8-1)

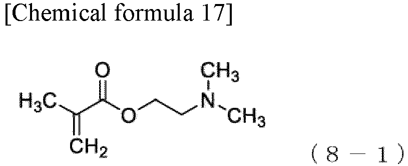

8. A surface treatment agent for powder, comprising the diblock copolymer according to any one of claims 1 to 4.

9. A dispersion comprising:
a powder treated with the surface treatment agent for powder according to claim 8; and
an oil agent.

10. A cosmetic material composition, coating material composition or ink composition comprising the dispersion according to claim 9.
